# FASCICULE DE BREVET EUROPEEN

(11) **EP 0 614 325 B1**
(45) Date de publication et mention de la délivrance du brevet: **05.01.2000**
(21) Numéro de dépôt: 94400385.4
(22) Date de dépôt: 23.02.1994
(51) Int. Cl.: H04Q 11/04, H04L 12/56

(54) **Réseau ATM pour une installation de communication**
ATM-Netz für eine Kommunikationsanlage
ATM-network for a communication system

(30) Priorité: 26.02.1993 FR 9302221
(43) Date de publication de la demande: 07.09.1994
(73) Titulaire: ALCATEL, 75008 Paris (FR)
(72) Inventeur: Gass, Raymond, F-67150 Bolsenheim (FR)
(74) Mandataire: Schaub, Bernard

(56) Documents cités:
- EP-A- 0 552 794
- US-A- 5 126 999
- US-A- 5 140 584
- US-A- 5 179 556

## Description

L'invention concerne un réseau de commutation asynchrone pour installation de communication comportant des unités supports de mode paquet et plus particulièrement un système de régulation de trafic pour un tel réseau.

La demande de brevet français référencée FR-A-2 665 314 (ainsi que par exemple les documents US-A-5 140 584 et US-A-5 126 999) décrit un réseau d'interconnexion pour coeur d'installation de communication de type numérique, à intégration de services, par lequel les unités modulaires spécialisées constitutives de ce coeur sont reliées en point-à-point, en fonction de leur besoins en matière de communication.

Un tel réseau incorpore éventuellement un sous-réseau asynchrone relatif aux unités supports de mode paquet, c'est à dire celles qui interviennent directement ou indirectement dans ce coeur à l'occasion des commutations de données mises sous forme de paquets.

De manière classique, de tels paquets de données sont commutés au niveau de commutateurs qui ont une structure centralisée ou par un réseau distribué, formé par un bus ou par une boucle, chaque commutateur comporte une mémoire dans laquelle les paquets entrants sont temporairement conservés jusqu'au moment où ils sont transmis vers des destinations qui dépendent des indications d'adresse contenues dans leurs en-têtes respectives.

Les commutateurs comportent une pluralité d'entrées par l'intermédiaire desquelles ils sont susceptibles de recevoir des paquets et ces derniers sont orientés vers les sorties qui correspondent à leurs destinations respectives. Chaque sortie est donc apte à transmettre une succession de paquets qui lui parviennent éventuellement d'entrées différentes, l'ordre de transmission des paquets par une même sortie étant fixée selon des critères prédéterminés, notamment en fonction du temps d'arrivée de chacun et de la priorité qui lui est attribuée.

Les paquets en attente de transmission par une sortie sont donc temporairement stockés en mémoire de commutateur jusqu'au moment de leur transmission. Dans la mesure où généralement les éventuels émetteurs de paquet sont indépendants les uns des autres, il peut arriver que le nombre de paquets provenant par les diverses entrées et à écouler par une sortie de commutateur dépasse la capacité d'écoulement de cette sortie, si aucune précaution n'est spécifique n'est prise. Il existe alors des risques de perte de paquet dans les commutateurs, ces pertes pouvant, par exemple, se produire si un grand nombre de terminaux asynchrones tentent simultanément de communiquer avec un même serveur asynchrone, via un même accès.

Il est donc prévu de limiter les risques de perte de paquet au niveau des commutateurs, ces pertes étant plus particulièrement susceptibles de survenir au niveau des mémoires où sont temporairement stockés les paquets, ces mémoires, classiquement de type pile, étant prévues de capacité limitée pour des raisons d'encombrement et de coût.

Une première mesure permettant de limiter ces risques de perte est classiquement trouvée dans les réseaux asynchrones de grandes dimensions, elle consiste à assurer une desserte des utilisateurs par l'intermédiaire de commutateurs montés en parallèle de manière à diminuer les risques en les répartissant. Cette première mesure est généralement associée à des mesures permettant de limiter les trafics en entrée en prenant en compte les différences existant entre des valeurs de trafic prédéterminées et des valeurs qui correspondent aux trafics écoulés. Toutefois ceci implique la mise en oeuvre d'un ensemble de moyens qu'il n'est généralement pas envisageable d'implanter dans des installations de type privé, en particulier pour des raisons de coût et d'adéquation.

L'invention propose donc un réseau de commutation asynchrone pour coeur d'installation de communication comportant des unités supports de mode paquet directement ou indirectement interconnectées en point-à-point par des liaisons physiquement structurées et temporellement régies de manière identique.

Selon une caractéristique de l'invention, ce réseau comporte un système de régulation de trafic incluant des moyens de contrôle d'accès distribués dans chaque unité, support de mode paquet, pour permettre à cette unité de fixer l'ordre de communication des paquets envoyés vers elle par les autres unités, supports de mode paquet, en fonction des contraintes qui lui sont propres et imposées, de manière temporaire ou permanente, et/ou de celles qui lui sont signalées par les autres unités, avec lesquelles elle communique, chaque transmission d'un paquet d'une unité, support de mode paquet, vers une autre unité support de mode paquet, requérant l'envoi d'une requête par l'unité désireuse d'émettre vers l'unité avec laquelle elle désire communiquer et l'envoi d'un acquiescement en sens inverse à partir de cette dernière, pour chacun des éléments de paquet séparément transmis entre ces unités.

L'invention, ses caractéristiques et ses avantages sont précisés dans la description qui suit en liaison avec les figures évoquées ci-dessous.

La figure 1 présente un schéma de principe d'un exemple de sous-réseau d'interconnexion entre unités supportant le mode paquet d'une installation de communication, de type numérique à intégration de services.

La figure 2 présente un schéma d'un circuit de contrôle d'accès pour unité support de mode paquet.

La figure 3 présente un schéma de principe d'un agencement d'échange pour circuit de contrôle d'accès tel que présenté en figure 2.

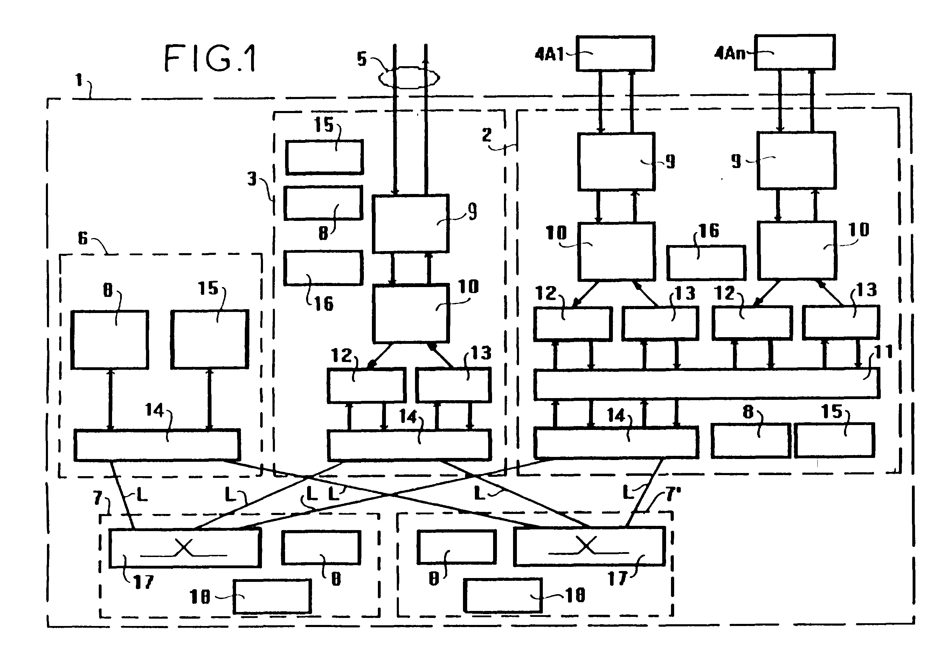

L'installation de communication partiellement présentée sur la figure 1 est préférablement une installation numérique multiservice du type envisagé dans le document FR-A-2 665 314, elle comporte donc un coeur d'installation 1 composé d'unités diverses qui sont reliées entre elles, en point-à-point, par des liaisons spécifiquement prévues pour répondre aux besoins des unités qu'elles desservent.

Ces unités sont par exemple aménagées sur des cartes porteuses individuelles destinées à être regroupées à l'intérieur d'une même structure, usuellement de type armoire ou coffret où se situe le coeur de l'installation.

Les diverses cartes porteuses d'un coeur d'installation sont, si possible, interconnectées par des liaisons, de type point-à-point, qui sont portées par une carte, dite de fond de panier, à laquelle les cartes porteuses d'unité viennent se connecter au niveau de positions de carte comportant des organes de connexion appropriés.

En variante, il est aussi possible d'associer plusieurs ensembles du type envisagé ici pour constituer un ensemble de plus grande capacité localisé ou non sur un même site, l'ensemble alors obtenu étant alors susceptible d'exploiter des liaisons de transmission n'appartenant pas à l'installation pour la mise en communication entre sites.

Comme indiqué plus haut les liaisons, de type point-à-point, du coeur d'une installation sur un site sont constituées et ou régies en fonction des besoins des unités qu'elles interconnectent. Les unités d'un coeur qui ont des mêmes besoins sont interconnectées par un réseau de liaisons identiquement constituées et régies, étant entendu qu'une même unité est susceptible d'être desservie par des liaisons, point-à-point différemment constituées et/ou régies, si cela est nécessaire à son fonctionnement.

Un coeur d'installation multiservice est susceptible de comprendre plusieurs sous-réseaux d'interconnexion différents. Chacun de ces sous-réseaux exploite des liaisons constituées et/ou régies d'une manière déterminée qui lui est propre et qui diffère de celles en vigueur dans les autres sous-réseaux.

Dans l'exemple présenté figure 1, le sous-réseau pris en compte est celui qui est prévu pour interconnecter les unités, supports de mode paquet, du coeur 1 de l'installation considérée. Ces unités qui interviennent directement ou indirectement à l'occasion des échanges de données numérisées groupées sous forme de paquets, sont notamment des coupleurs 2, 3 de rattachement d'appareils, tels 4A1, 4An ou de liaisons de transmission, telle 5, reliant le coeur d'installation 1, à d'autres ensembles de l'installation situés sur des sites différents ou à d'autres installations, soit directement, soit via au moins un réseau de communication auquel le coeur d'installation 1 est relié par la ou les liaisons de transmission considérées.

Le coupleur 2 est par exemple un coupleur d'entrée/sortie permettant la desserte d'appareils, tels 4A1 et 4An, utilisateurs ou fournisseurs de données aptes à communiquer en mode paquet, tels que des postes, des terminaux, ou tout autre équipement asynchrone usuellement dit ATM, par exemple un équipement de type serveur ATM.

Le coupleur 2 qui est supervisé en interne par un microcontrôleur 8 en association avec une base de temps 16, est ici supposé comporter une pluralité d'interfaces de ligne 9 permettant une desserte individuelle des appareils 4A1 à 4An respectivement reliés à eux par des liaisons bidirectionnelles qui sont usuellement de type filaire, électrique ou optique. Chacune des interfaces de ligne 9 du coupleur 2 est reliée à un contrôleur de communications 10 notamment chargé de gérer les échanges de paquets avec l'appareil desservi à laquelle elle est reliée.

Dans la réalisation envisagée, chacun des contrôleurs de communications 10 du coupleur 2 est relié, en parallèle avec les autres contrôleurs de communications 10 du coupleur, à un multiplexeur-démultiplexeur 11, par l'intermédiaire de modules de conversion 12 et 13. Chaque module de conversion 12 assure une encapsulation individuelle des paquets mis sous forme de cellules, de type standardisé, ou des cellules, qu'il reçoit de l'appareil , tel 4A1, ou de la liaison 5 qu'il dessert.

Chaque encapsulation individuelle donne naissance à une cellule, dite encapsulée, associant à une cellule standardisée reçue, à commuter, les paramètres de routage nécessaires à sa commutation dans le réseau asynchrone dédié interconnectant les unités, supports de mode paquet du coeur 1. Inversement, chaque module de conversion 13 assure la désencapsulation des cellules encapsulées qui lui sont transmises par l'intermédiaire du réseau asynchrone dédié à destination d'un appareil ou d'une liaison tels qu'évoqués ci-dessus. Chaque désencapsulation dissocie l'élément de longueur fixe en nombre de bits correspondant à une cellule standardisée des bits additionnels qui ont été associés à cette cellule standardisée par le module de conversion 12 qui l'a encapsulée.

Un circuit de contrôle d'accès 14 est inséré entre le multiplexeur-démultiplexeur 11 du coupleur 2 et les liaisons L qui permettent de relier ce coupleur aux autres unités, supports de mode paquet, du coeur d'installation qui comporte ce coupleur 2.

Ce circuit de contrôle d'accès 14 assure la gestion des échanges de cellules encapsulées avec les autres unités, supports de mode paquet, qui comportent toutes un circuit de contrôle d'accès identique. Il est supervisé dans ses tâches par le microcontrôleur 8 du coupleur 2, un ensemble mémoire 15 approprié étant associé au microcontrôleur.

Le coupleur 3 est par exemple un coupleur de rattachement pour liaison(s) de transmission asynchrone(s), bidirectionnelle(s), la liaison 5 présentée est par exemple une liaison asynchrone autorisant un débit de 155 Mbit/s dans chaque sens, il peut aussi être un coupleur d'accès à un réseau local normalisé de type ETHERNET ou de type anneau à jeton, transmettant des informations sous forme de paquets de données numériques.

Dans l'exemple schématique proposé en figure 1, le coupleur 3 comporte une base de temps 16, un microcontrôleur 8 avec un ensemble mémoire 15 associé, une interface de ligne 9 auquel la liaison de transmission 5 vient aboutir, un contrôleur de communications 10, ainsi que deux modules de conversion 12 et 13 et un circuit de contrôle d'accès 14 directement interconnectés, ces divers composants ayant pratiquement les mêmes fonctions que dans le coupleur 2.

Parmi les unités supports de mode paquet sont aussi susceptibles de figurer des coupleurs d'unité(s) spécialisée(s), qui sont ici symbolisés par un coupleur 6, ces équipements peuvent éventuellement être communs à plusieurs sous-réseaux du coeur d'installation, notamment si l'unité est une unité de commande ou de gestion.

Un tel coupleur 6 est par exemple organisé autour d'au moins un microcontrôleur 8, associé à un ensemble de mémoires mortes et/ou vives 15, il comporte un circuit de contrôle d'accès 14 pour ses communications en mode paquet, ici par l'intermédiaire de cellules encapsulées, avec les autres unités, supports de mode paquet, du coeur d'installation 1 dont il fait partie.

Comme indiqué plus haut, les communications en mode paquet entre ces unités s'effectuent en point-à-point.

Dans le réseau paquet du coeur d'installation 1, il est prévu au moins une et préférablement deux unités de commutation 7, 7' à chacune desquelles toutes les unités, supports de mode paquet, sont respectivement reliées par des liaisons L individuelles et bidirectionnelles qui sont identiquement constituées et régies, comme indiqué plus haut; chaque liaison L est par exemple de type liaison asynchrone acceptant un débit de 155 Mbit/s dans chaque sens.

Ces unités de commutation 7, 7' sont par exemple organisées autour d'éléments de commutation large bande, ici référencés 17 et tels qu'évoqués dans l'article intitulé "Techniques large bande" publié dans le numéro 1 du volume 65 de la Revue des Télécommunications Alcatel. Un élément de commutation 17 de ce type est prévu pour assurer une commutation spatiale de suite de données numériques organisées en cellules encapsulées, il est classiquement supervisé par une logique incorporant un microcontrôleur 8 et une circuit 18 de génération et de distribution d'horloge aux unités, supports de mode paquet, via les liaisons L qui les desservent.

Chaque cellule encapsulée est composée d'un élément d'entête suivi par un nombre entier maximal déterminé de "m" éléments de transmission de données de paquet, chacun de ces éléments comportant un même nombre d'octets et étant scindé en un champ de commande et un champ pour les données. Chaque élément d'en tête contient des données destinées à être exploitées pour le routage de la cellule encapsulée qui le comporte par l'unité de commutation 7 ou 7' que cette cellule encapsulée va rencontrer dans l'installation, ainsi que des données qui permettront de reconstituer le paquet dont la cellule est issue, cela en fin de transit à l'intérieur de l'installation.

Ceci implique donc que tout paquet à transmettre entre unités d'un sous-réseau paquet de coeur d'installation, tel qu'envisagé ici, soit découpé en éléments destinés à constituer des cellules standardisées, qui seront transmises individuellement transmises après encapsulation, si la longueur du paquet excède la longueur maximale d'élément de paquet prévue par cellule, ceci implique aussi que les unités du sous-réseau puissent temporairement stocker les cellules encapsulées des paquets en cours de transmission.

Il est donc possible de relier entre elles deux quelconques unités, supports de mode paquet, du sous-réseau, via l'une ou l'autre des unités de commutation 7, 7', étant compris que si l'une des liaisons L reliant une unité, support de mode paquet, par exemple le coupleur 3, à l'une des unités de commutation, telle 7, fonctionne à son débit maximal, soit 155 Mbit/s dans l'exemple précédemment évoqué, il est encore possible à cette unité, support de mode paquet, de communiquer dans le cadre du sous-réseau paquet par la liaison L qui la relie à l'autre unité de commutation.

Il est de plus prévu que les transmissions des cellules encapsulées par l'intermédiaire des liaisons L entre unités, supports de mode paquet, du coeur d'installation 1 s'effectuent selon une procédure impliquant l'envoi d'une requête de l'unité désireuse d'émettre vers l'unité avec laquelle elle veut communiquer et d'un acquiescement de la part de l'unité demandée.

Ceci pour permettre à une unité demandée d'agir sur le flot de données de paquet qui lui est destiné.

Cette action qui peut être gérée à bas niveau dans l'unité demandée, est modulée en fonction des possibilités de traitement dont dispose cette unité et des priorités qui s'imposent successivement à elle au cours du temps, en particulier lorsque plusieurs unités désirent émettre vers elle.

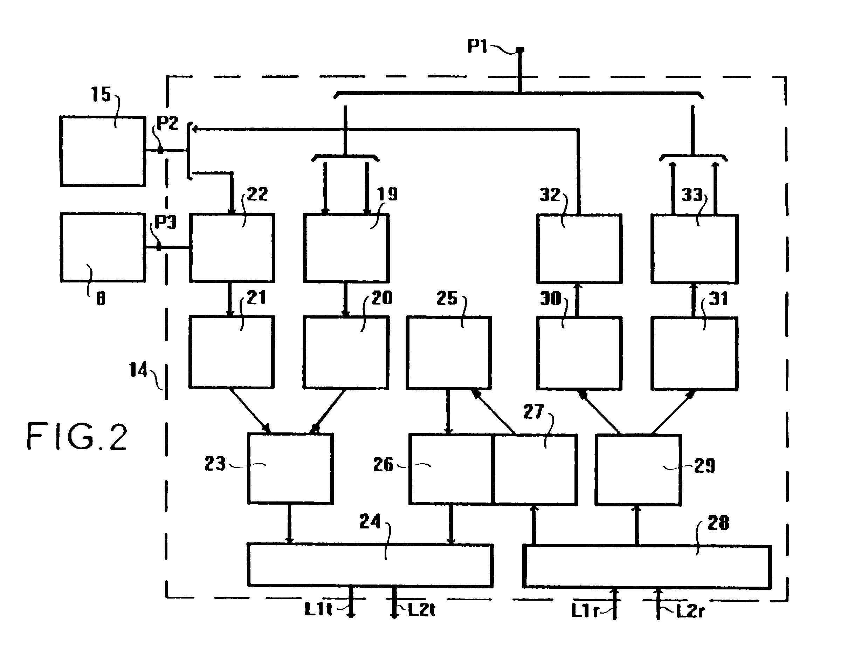

Dans la réalisation proposée, la gestion de ces actions est réalisée par les circuits de contrôle d'accès 14 que comportent les unités, supports de mode paquet, 2, 3, 6, un exemple d'un tel circuit étant schématiquement représenté en figure 2.

Dans l'exemple présenté, il existe deux possibilités de liaison du circuit de contrôle d'accès au coupleur qu'il dessert. L'une de ces possibilités est destinée à permettre la transmission des cellules déjà formatées sous forme standardisée qui sont traitées en mode "connecté" et pour lesquelles il existe des contraintes relativement sévères en matière de délai de transmission. L'autre possibilité est destinée à permettre la transmission de paquets qui n'ont pas déjà été préformatés sous forme de cellules standardisées et qui peuvent être traités en mode "sans connexion" dans la mesure où leur transmission n'est pas soumise à des contraintes impératives en matière de délai de transmission.

Des priorités différentes sont en conséquence attribuées, au niveau des circuits de contrôle d'accès 14, aux deux types de service offerts.

La liaison de transmission bidirectionnelle 5 présentée en figure 1 est ici supposée, à titre d'exemple, transmettre des cellules encapsulées en mode "connecté" à un port P1, ici double, du circuit de contrôle d'accès 14, alors que les paquets en mode "sans connexion" sont supposés susceptibles d'être échangés, via un port P2, avec une mémoire 15 du coupleur comportant le circuit de contrôle d'accès 14 représenté, par exemple dans le cadre d'échanges de fichiers avec une mémoire de microcontrôleur d'un autre coupleur, sans contrainte temporelle spécifique de transmission.

Comme indiqué plus haut, chaque paquet fourni à un coupleur par un appareil, tel que 4A1, ou par une liaison de transmission, telle que 5, est scindé en éléments successifs de longueur fixe, si besoin est, chacun de ces éléments étant destiné à être incorporé dans une cellule standardisée telle que définie plus haut pour sa transmission dans le coeur d'installation 1. Cette encapsulation est ici réalisée dans une interface spécialisée référencée 19 reliée par le port P1 et via un double lien au(x) module(s) de conversion 12 du coupleur considéré.

La succession de cellules encapsulées obtenues en sortie de l'interface d'encapsulation 19 d'un coupleur est transmise à une première mémoire tampon 20.

Dans l'exemple proposé où au moins certains des coupleurs sont susceptibles de transmettre aussi bien des cellules encapsulées en mode dit "connecté" que des cellules encapsulées en mode dit "sans connexion" et dans la mesure où il est nécessaire de pouvoir donner priorité aux premiers vis-à-vis des seconds, si besoin est, il existe une seconde mémoire tampon 21 pour la succession de cellules encapsulées à transmettre qui sont issues de paquets transmis en mode "sans connexion". Ces cellules encapsulées aussi dites ici "sans connexion" sont supposées réalisées par un circuit d'encapsulation 22 à partir des données numériques fournies de la même manière qu'un fichier usuel par une mémoire tampon de sortie, ici envisagée contenue dans l'ensemble mémoire 16. Le microcontrôleur 8 associé à l'ensemble mémoire 15 considéré assure la supervision du processus mis en oeuvre par le circuit d'encapsulation 22, de manière notamment à ce que soit ajoutées les données destinées à permettre la reconstitution des informations encapsulées, après transmission.

Les cellules encapsulées alternativement transmises par les deux mémoires tampons 20 et 21 sont rangées en fonction des priorités qui leur sont accordées dans une mémoire tampon de transmission 23 avant d'être envoyées, via une interface d'émission 24 sur l'un et/ou l'autre des liens sortants Llt, L2t des deux liaisons L reliant le coupleur considéré aux unités de commutation 7 et 7' en point-à-point.

Dans la réalisation proposée, l'interface d'émission 24 est placé sous la commande d'un automate de gestion d'accès qui autorise les émissions des cellules encapsulées, en attente, par l'intermédiaire d'un lien sortant L1t ou L2t de liaisons L en fonction des acquiescements transmis par le lien entrant L1r ou L2r correspondant à partir de l'unité, support de mode paquet, destinataire des cellules encapsulées en attente. Une mémoire tampon 26 relie l'automate de gestion d'accès 25 à l'interface d'émission 24, elle stocke les requêtes et acquiescements en attente d'émission par les liens L1t et L2t vers des unités, supports de mode paquet, destinataires du coeur d'installation 1.

L'automate 25 est relié par une mémoire tampon 27 en sortie d'une interface de réception 28 à laquelle aboutissent les deux liens entrants L1r et L2r qui unissent le coupleur considéré aux deux unités de commutation 7 et 7' du coeur d'installation 1, afin de prendre en compte les données d'en-tête de cellule encapsulée relatives aux requêtes et acquiescements reçus par le circuit de contrôle d'accès 14, ces données étant classiquement positionnées selon une configuration particulière dans la suite de données constituant chaque en-tête.

Une mémoire tampon de réception 29 reliée en sortie de l'interface de réception 28 est prévue pour permettre la récupération des cellules encapsulées reçues en vue de la désencapsulation des données d'information qu'elles contiennent, elle reçoit en conséquence les cellules encapsulées transmises à cette interface de réception par les liens L1r et L2r.

Deux mémoires tampons secondaires 30 et 31 sont reliées en parallèle pour recueillir sélectivement les cellules encapsulées transmises par la première mémoire tampon de réception 29 en fonction des données d'en-tête de chacune de ces cellules encapsulées, sachant que ces données précisent la destination des données d'information qui leur font suite dans la cellule.

Les cellules encapsulées contenant des données de paquets en mode dit "sans connexion" sont ainsi orientées vers la mémoire tampon secondaire 30, alors que celles contenant des données de paquets en mode "connecté" sont envoyées à la mémoire tampon secondaire 31.

Un circuit de désencapsulation 32 est inséré entre le port P2 du circuit de contrôle d'accès 14 considéré et la mémoire tampon secondaire 30 de ce dernier. Il assure une reconstitution de chaque paquet à partir des données d'informations contenues dans les cellules encapsulées répertoriées comme ayant servi à la transmission de ce paquet qui correspond par exemple à un fichier, de manière à permettre la transmission de l'information globale reconstituée. Cette transmission est ici supposée assurée par le circuit de désencapsulation 32 vers par exemple une mémoire de l'ensemble 15 associé, les données étant alors formatées d'une manière permettant leur transmission sous une forme acceptée par cette mémoire.

Une interface de désencapsulation 33 est placée en sortie de la mémoire tampon secondaire 31 et en amont du port P1 pour desservir le ou les modules de conversion 13 du coupleur par l'intermédiaire d'ici deux liens sortants. Elle a approximativement même fonction vis-à-vis de ces modules que le circuit de désencapsulation 32 vis-à-vis de la mémoire destinataire, elle assure plus particulièrement une restitution des éléments de longueur fixe successifs à partir desquels chaque paquet transmis sous forme de cellules peut être reconstitué.

Comme indiqué plus haut, toute unité, support de mode paquet, désireuse d'émettre envoie une requête vers l'unité avec laquelle elle veut communiquer. Cette requête est ici prévue contenue dans un élément d'en-tête spécifique d'une cellule encapsulée qui est transmise par le circuit de contrôle d'accès 14 de l'unité considérée, via au moins l'un des deux liens L1t, L2t permettant à ce circuit de communiquer avec les circuits de contrôle d'accès 14 des autres unités par l'intermédiaire de l'une ou l'autre des unités de commutation 7, 7'. Chaque unité de commutation aiguille toute cellule encapsulée qu'elle reçoit vers l'unité destinataire désignée dans l'en-tête correspondante, via le lien L1r ou L2r la reliant à cette unité destinataire, après avoir éliminé si nécessaire, les données de routage qui lui étaient nécessaires et qui sont devenues inutiles.

L'unité destinataire, avec laquelle plusieurs autres unités veulent communiquer, reçoit les requêtes qui sont individuellement produites par ces unités et qui lui sont transmises via les liens L1r et L2r de son circuit de contrôle d'accès 14 afin que ces requêtes soient traitées par l'automate 25 contenu dans ce circuit de contrôle d'accès.

Elle règle elle-même la contention entre ces unités demanderesses et désigne celle dont l'émission est temporairement autorisée en lui envoyant un acquiescement.

Chaque unité dispose de moyens de contrôle d'accès, lui permettant de sélectionner les unités auxquelles elle va successivement envoyer des acquiescements. Ces sélections sont effectuées en fonction des contraintes qui lui sont imposées, notamment par le trafic de paquets en mode "connecté", de celles qui lui sont propres de manière permanente et/ou temporaire, ainsi que de celles dont font état les autres unités, supports de mode paquet, avec lesquelles elle communiquent réellement.

Chaque acquiescement est ici transmis, à l'unité désireuse d'émettre qui a été sélectionnée, sous la forme d'un élément d'en-tête spécifique de cellule encapsulée, cet élément étant adressé à cette unité par l'unité avec laquelle elle veut correspondre.

Dans la mesure où une même unité est fréquemment susceptible de vouloir émettre plusieurs cellules encapsulées successives vers une même autre unité destinataire et où les éléments spécifiques caractéristiques des requêtes et des acquiescements sont systématiquement situés en en-tête de capsule, il est prévu de faire envoyer les requêtes, individuellement nécessaires à la transmission de cellules en succession d'une unité vers une autre, dans l'en-tête des cellules encapsulées dont l'acquiescement a été reçu. Une cellule encapsulée transmise dans le cadre d'une telle succession est alors susceptible de contenir une requête destinée à permettre l'émission d'une des cellules encapsulées qui la suit et pour laquelle un acquiescement n'a pas encore été reçu.

Il en est de même pour les requêtes d'une unité vers une autre qui sont également susceptibles d'être successivement émises chacune dans une des cellules encapsulées à émettre pour lesquelles les acquiescements ont été reçus.

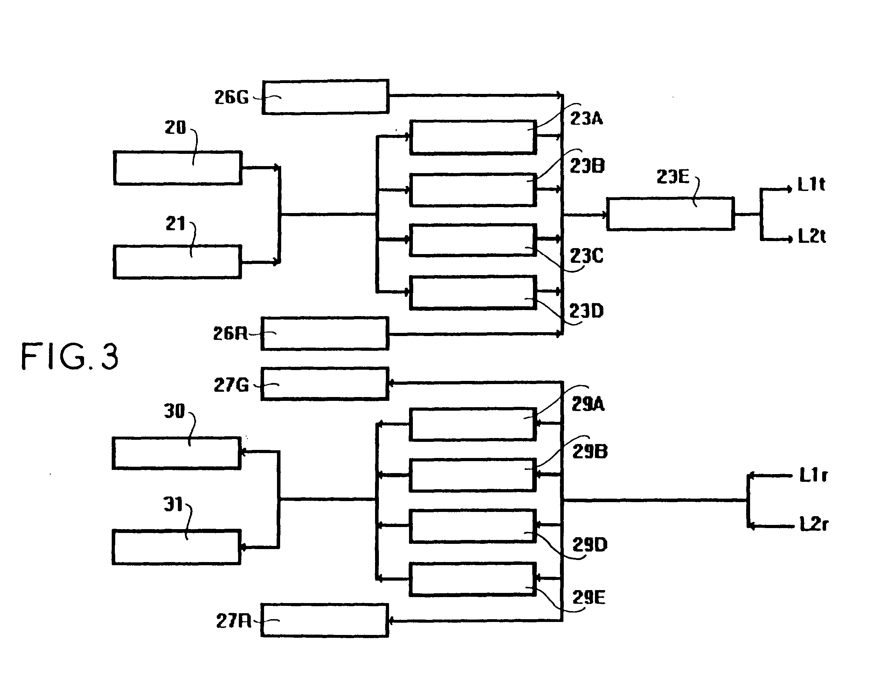

La figure 3 est destinée à montrer l'organisation du système de régulation des trafics d'information, au niveau d'un circuit de contrôle d'accès 14, dans un sous-réseau paquet d'un coeur d'installation, par échange de requêtes et d'acquiescements entre les unités, supports de mode paquet, en communication.

Comme indiqué plus haut, toute unité, support de mode paquet, ayant à transmettre des données par l'intermédiaire de cellules, à destination d'une autre unité du sous-réseau paquet, émet une requête à destination de cette unité destinataire, une indication de niveau de priorité est associée à cette requête et ce niveau est notamment fonction du mode de trafic "connecté "ou "sans connexion" dont relève chaque cellule, les cellules encapsulées de paquet en mode "connecté" étant de niveau de priorité le plus élevé.

Ceci explique la présence des deux mémoires tampons 20 et 21 parallèles dans lesquelles s'empilent respectivement les cellules encapsulées contenant des éléments de paquet en mode "connecté" pour la mémoire tampon 20 et les autres cellules encapsulées dues au trafic "sans connexion" pour la mémoire 21.

L'émission d'une cellule encapsulée par le circuit de contrôle d'accès 14 d'une unité, support de mode paquet, vers une autre unité du coeur d'installation 1, implique l'envoi préalable d'une requête à l'unité destinataire, dès que cela est possible. Les requêtes en attente d'émission dans un circuit de contrôle d'accès 14 sont stockées dans un module tampon 26G (figure 3) de la mémoire tampon d'émission 26 avant d'être émis sur l'un et/ou l'autre des liens L1t et L2t vers les unités de commutation chargées de leur aiguillage.

Une indication de niveau de priorité est associée à chaque requête par l'automate 25, ce niveau qui est d'ordre plus élevé pour les cellules de paquet en mode "connecté" stockées dans la mémoire tampon 20, est variable et augmente en fonction de la durée de stockage pour les cellules encapsulées stockées dans la mémoire tampon 21. A cet effet, des niveaux de priorité de plus en plus élevés sont affectés aux requêtes produites au fur et à mesure de l'empilement des cellules en mémoire tampon 21, de manière à fournir une indication d'encombrement relatif de l'unité demanderesse à l'unité destinataire.

Dans une forme préférée de réalisation, les requêtes qui sont émises préalablement aux cellules encapsulées qu'elles concernent, sont transmises dans l'en-tête d'une cellule encapsulée pour laquelle un acquiescement a déjà été reçu, à chaque fois que cela est possible. La réception d'un acquiescement par une unité indique à celle-ci que l'unité ayant émis vers elle est libre en réception, il n'y a donc pas possibilité d'engorgement en réception d'une unité par les autres.

Dans le système présenté en figure 3, les cellules encapsulées stockées dans les mémoires tampons 20 et 21 sont transmises à des fins d'émission à des modules tampons de la mémoire tampon de transmission 23. Ces modules, ici au nombre de quatre, sont référencés 23A à 23D sur la figure 3, ils sont destinés à permettre l'émission de cellules destinées à des unités différentes, au fur et à mesure de la réception des requêtes correspondantes provenant de ces unités destinataires. Les cellules encapsulées sortant de chacun des modules 23A à 23D sont susceptibles d'être transmises entrelacées entre des cellules encapsulées émanant d'au moins l'un des autres de ces modules, elles sont empilées dans une module 23E avant envoi. Ceci permet d'éviter de retarder l'émission par une unité des cellules à destination d'unités destinataires prêtes à les recevoir, lorsqu'une autre unité destinataire n'est temporairement pas disponible en réception.

Comme indiqué plus haut, les cellules encapsulées issues des modules tampons de transmission 23A à 23D reçoivent éventuellement dans leurs en-têtes respectifs les éléments caractéristiques d'une requête ou d'un acquiescement à transmettre à l'unité à laquelle la cellule encapsulée est envoyée, ces éléments étant alors fournis par le module tampon 26G pour les données caractéristiques d'une requête ou par un module tampon 26R correspondant pour les données caractéristiques d'un acquiescement, ces deux modules 26G et 26R étant supervisés sous le contrôle de l'automate 25.

Les requêtes émises à destination d'une unité parviennent au circuit de contrôle d'accès 14 de cette unité par les liens entrants L1r, L2r qui y aboutissent et elles sont transmises avec les cellules encapsulées qui les contiennent à l'interface de réception 28 de ce circuit. Les différentes cellules encapsulées reçues par cette interface de réception 28 sont susceptibles d'être prises en compte par les mémoires tampons 27 et 29, parallèles.

Ces mémoires tampons sont supposées modulaires dans le système tel que présenté en figure 3, la mémoire tampon 27 étant scindée en deux modules distincts 27G et 27R respectivement réservés l'un au stockage en pile des acquiescements reçus pour le module mémoire 27G et l'autre en stockage en pile des requêtes reçues pour le module 27R. Ces acquiescements empilés et ces requêtes empilées sont susceptibles de parvenir de diverses unités, supports de mode paquet, du coeur d'installation 1 et comme indiqué plus haut, les requêtes sont préférablement classées, en premier, selon la priorité qui leur a été attribuée par l'unité qui les a produites et, en second selon l'ancienneté de leur arrivée dans le module 27R où elles sont empilées. Comme on l'a vu, il est donc possible à une unité ayant préalablement envoyé une requête pour laquelle un acquiescement n'a pas encore été reçu, d'émettre une seconde requête avec une priorité plus élevée afin de signaler son encombrement croissant et d'obtenir un acquiescement de manière plus rapide.

Parallèlement, les cellules standardisées transmises par des liens L1r et L2r à une interface de réception 28 sont transmises à l'un ou l'autre des modules, ici référencés 29A à 29D de la mémoire tampon 29, sans les données relatives aux requêtes et acquiescements qu'elles contiennent.

Chaque module 29A à 29D permet de stocker les cellules encapsulées émanant d'une unité émettrice différente au fur et à mesure de l'arrivée de ces cellules dans le flot de cellules encapsulées d'origines éventuellement diverses qui sont transmises par les liaisons L1r et L2r à l'interface de réception 28 associée.

La sélection du module tampon 29A à 29D choisi pour recevoir une cellule encapsulée s'effectue donc en fonction de l'adresse d'unité émettrice écrite dans l'en-tête de cette cellule par cette unité.

Les cellules encapsulées stockées dans un même module tampon 29A à 29D sont ensuite transmises, dans l'exemple envisagé, à l'une ou l'autre des mémoires tampons secondaires 30 et 31 suivant le mode "connecté" ou "sans connexion" choisi pour le paquet dont elles font partie, comme l'indiquent leurs en-têtes respectifs. Il est alors prévu une reconstitution au niveau de l'interface de désencapsulation 33 de l'unité réceptrice, soit des cellules standardisées constituant les éléments qui sont destinés à permettre la reconstitution du paquet initial reçu au niveau de l'unité émettrice, soit éventuellement du module d'information initial, tel un fichier transmis en mode paquet, au niveau du circuit de désencapsulation 32 de l'unité réceptrice, par exemple en vue de sa transmission à la mémoire, non représentée de l'ensemble 15 qui est destinée à la recevoir dans cette unité réceptrice.

## Revendications

1. Réseau de commutation asynchrone pour coeur d'installation de communication (1) comportant des unités supports de mode paquet (2, 3, 6) directement ou indirectement interconnectées en point-à-point par des liaisons (L) physiquement structurées et temporellement régies de manière identique, caractérisé en ce qu'il comporte un système de régulation de trafic incluant des moyens de contrôle d'accès (14, 8, 16) distribués dans chaque unité, support de mode paquet, pour permettre à cette unité de fixer l'ordre de communication des paquets envoyés vers elle par les autres unités, supports de mode paquet, en fonction des contraintes qui lui sont propres et imposées, de manière temporaire ou permanente, et/ou de celles qui lui sont signalées par les autres unités, avec lesquelles elle communique, chaque transmission d'un paquet d'une unité support de mode paquet, vers une autre unité support de mode paquet, requérant l'envoi d'une requête par l'unité désireuse d'émettre vers l'unité avec laquelle elle désire communiquer et l'envoi d'un acquiescement en sens inverse à partir de cette dernière, pour chacun des éléments de paquet séparément transmis entre ces unités.

2. Réseau de commutation asynchrone, selon la revendication 1, dans lequel chaque élément de paquet séparément transmis entre unités est encapsulé dans une cellule de dimension fixe, dotée d'un en-tête, pour sa transmission dans l'installation entre unités supports de mode paquet, ledit réseau comportant un système de régulation de trafic doté de moyens (8, 22, 12, 19, 25) pour permettre l'envoi de requêtes individuelles à partir de chaque unité support de mode paquet, par insertion de données spécifiques de requête dans l'en-tête des cellules encapsulées émises à partir de l'unité considérée, chaque requête émise dans un en-tête de cellule encapsulée comportant une indication de priorité délivrée par l'unité émettrice.

3. Réseau de commutation asynchrone, selon la revendication 2, caractérisé en ce qu'il comporte un système de régulation de trafic doté de moyens (20, 21, 23) de stockage en émission distribués dans chaque unité support de mode paquet, pour temporairement stocker les cellules encapsulées à émettre en fonction des priorités individuelles déterminées pour ces cellules au niveau de cette unité, et éventuellement pour dissocier les cellules encapsulées relatives à un trafic en mode "connecté", impliquant une transmission entre unités, supports de mode paquet, avec des contraintes données de délai, de celles relatives à un trafic en mode "sans connexion", à moindres contraintes.

4. Réseau de commutation asynchrone, selon la revendication 3, caractérisé en ce qu'il comporte un système de régulation de trafic doté de moyens de stockage temporaire (26) en émission distribués dans chaque unité support de mode paquet, pour stocker en des piles séparées, d'une part, les requêtes et, d'autre part, les acquiescements qui sont à émettre à destination des autres unités, supports de mode paquet.

5. Réseau de commutation asynchrone, selon la revendication 3, caractérisé en ce qu'il comporte un système de régulation de trafic doté de moyens de stockage temporaire (27, 29) en réception distribués dans chaque unité support de mode paquet, pour séparément récupérer d'une part les requêtes et acquiescements envoyés à cette unité dans les en-têtes des cellules encapsulées qu'elle reçoit des autres unités, et d'autre part les autres éléments de ces cellules encapsulées reçues.

6. Réseau de commutation asynchrone, selon la revendication 5, caractérisé en ce que des moyens de stockage supplémentaire (30, 31) sont associés aux moyens de stockage temporaire dans chaque unité support de mode paquet, pour stocker en des piles séparées les éléments de cellules encapsulées reçus relatifs à un trafic en mode "connecté", de ceux relatifs à un trafic en mode "sans connexion".

7. Réseau de commutation asynchrone, selon les revendications 3 et 5, caractérisé en ce que les moyens de stockage temporaire en émission (23) et en réception (29) sont respectivement scindés en une pluralité de modules (23A à 23D, 29A à 29D) parallèles pour permettre des stockages séparés des cellules encapsulées en fonction des unités auxquelles ces cellules sont respectivement destinées à l'émission ou en réception, et pour autoriser des transmissions entrelacées de cellules encapsulées soient émises à destination d'unités destinataires différentes, soient reçues en provenance d'unités émettrices différentes.

8. Réseau de commutation asynchrone, selon au moins l'une des revendications précédentes, caractérisé en ce que les unités (2, 3, 6) supports de mode paquet, qu'il comporte, disposent chacune de deux liaisons bidirectionnelles (L) qui sont séparément raccordées chacune à l'une des deux unités d'un paire d'unités de commutation (7, 7'), de type large bande, auxquelles toutes les unités supports de mode paquet, sont raccordées, pour leurs communications en point-à-point, via l'une ou l'autre de ces unités de commutation.

## Patentansprüche

1. Asynchrones Vermittlungsnetz für einen Kommunikationsanlagenkern (1), der Trägereinheiten (2, 3, 6) für den Paketmodus aufweist, die direkt oder indirekt von Punkt zu Punkt durch Verbindungen (L) miteinander verbunden sind, die in gleicher Weise physikalisch aufgebaut und zeitlich geregelt sind, dadurch gekennzeichnet, dass es ein System zur Regelung des Verkehrs aufweist, das Mittel (14, 8, 16) zur Zugangssteuerung beinhaltet, die in jeder Einheit, Träger für den Paketmodus, verteilt sind, um dieser Einheit zu gestatten, die Kommunikationsreihenfolge für von den anderen Einheiten, Trägern für den Paketmodus, zu ihr geschickten Pakete in Abhängigkeit von Einschränkungen, die ihr eigen oder in vorübergehender Weise oder dauerhafter Weise auferlegt und/oder von denjenigen, die ihr von den anderen Einheiten, mit welchen sie kommuniziert, signalisiert werden, festzulegen, wobei jede Übertragung eines Paketes von einer Einheit, Träger für den Paketmodus, zu einer anderen Trägereinheit für den Paketmodus die Sendung einer Anfrage durch die Einheit, die senden will, zur Einheit, mit welcher sie kommunizieren will, und ausgehend von dieser letzteren die Sendung einer Zustimmung in umgekehrter Richtung für jedes der Paketelemente verlangt, die zwischen diesen Einheiten getrennt übertragen werden.

2. Asynchrones Vermittlungsnetz nach Anspruch 1, bei welchem jedes zwischen den Einheiten getrennt übertragene Paketelement für seine Übertragung in der Anlage zwischen den Trägereinheiten für den Paketmodus zu einer Zelle mit fester Dimension, mit einem Kopf versehen, eingekapselt wird, wobei das Netz ein System zur Regelung des Verkehrs aufweist, das mit Mitteln (8, 22, 12, 19, 25) versehen ist, um die Sendung von einzelnen Anfragen ausgehend von jeder Trägereinheit für den Paketmodus durch Einfügen von spezifischen Anfragedaten in den Kopf der ausgehend von der betrachteten Einheit gesendeten, eingekapselten Zellen zu gestatten, wobei jede in einem Kopf einer eingekapselten Zelle gesendete Anfrage eine von der Sendereinheit gelieferte Prioritätsangabe aufweist.

3. Asynchrones Vermittlungsnetz nach Anspruch 2, dadurch gekennzeichnet, dass es ein System zur Regelung des Verkehrs aufweist, das mit in jeder Trägereinheit für den Paketmodus verteilten Mitteln (20, 21, 23) zur Speicherung bei der Sendung versehen ist, um die zu sendenden, eingekapselten Zellen in Abhängigkeit von den individuellen Prioritäten vorübergehend zu speichern, die für diese Zellen in Höhe dieser Einheit bestimmt werden, und eventuell um die einen Verkehr im Modus "verbunden", der eine Übertragung zwischen den Einheiten, Trägern für den Paketmodus, mit gegebenen Verzögerungseinschränkungen voraussetzt, betreffenden, eingekapselten Zellen von denjenigen zu trennen, die einen Verkehr im Modus "ohne Verbindung" mit geringeren Einschränkungen betreffen.

4. Asynchrones Vermittlungsnetz nach Anspruch 3, dadurch gekennzeichnet, dass es ein System zur Regelung des Verkehrs aufweist, das mit in jeder Trägereinheit für den Paketmodus verteilten Mitteln (26) zur vorübergehenden Speicherung bei der Sendung versehen ist, um in getrennten Stapeln einerseits die Anfragen und andererseits die Zustimmungen zu speichern, die zu den anderen Einheiten, Trägern für den Paketmodus, zu senden sind.

5. Asynchrones Vermittlungsnetz nach Anspruch 3, dadurch gekennzeichnet, dass es ein System zur Regelung des Verkehrs aufweist, das mit in jeder Trägereinheit für_ den Paketmodus verteilten Mitteln (27, 29) zur vorübergehenden Speicherung beim Empfang versehen ist, um einerseits die Anfragen und die Zustimmungen, die dieser Einheit in den Köpfen der eingekapselten Zellen gesendet werden, die sie von anderen Einheiten empfängt, und andererseits die anderen Elemente dieser empfangenen, eingekapselten Zellen getrennt wiederherzustellen.

6. Asynchrones Vermittlungsnetz nach Anspruch 5, dadurch gekennzeichnet, dass in jeder Trägereinheit für den Paketmodus mit den Mitteln zur vorübergehenden Speicherung zusätzliche Speichermittel (30, 31) verbunden sind, um die Elemente der empfangenen, eingekapselten Zellen, die einen Verkehr im Modus "verbunden" betreffen, von denjenigen getrennt zu stapeln, die einen Verkehr im Modus "ohne Verbindung" betreffen.

7. Asynchrones Vermittlungsnetz nach den Ansprüchen 3 und 5, dadurch gekennzeichnet, dass die Mittel zur vorübergehenden Speicherung bei Sendung (23) und beim Empfang (29) jeweils in eine Vielzahl von parallelen Modulen (23A bis 23D, 29A bis 29D) zerteilt sind, um die getrennten Speicherungen der eingekapselten Zellen in Abhängigkeit von den Einheiten zu gestatten, für welche diese Zellen bei der Sendung bzw. beim Empfang bestimmt sind, und um verflochtene Übertragungen von entweder zu verschiedenen Empfängereinheiten gesendeten oder empfangenen, eingekapselten Daten, die von verschiedenen Sendereinheiten stammen, zuzulassen.

8. Asynchrones Vermittlungsnetz nach wenigstens einem der vorhergehenden Ansprüche, dadurch gekennzeichnet, dass die Trägereinheiten (2, 3, 6) für den Paketmodus, die es aufweist, jeweils über zwei bidirektionale Verbindungen (L) verfügen, die jeweils mit einer der beiden Einheiten eines Paares von Vermittlungseinheiten (7, 7') vom Breitbandtyp separat verbunden sind, mit welchen allen Trägereinheiten für den Paketmodus für ihre Kommunikation von Punkt zu Punkt über die eine oder die andere dieser Vermittlungseinheiten verbunden sind.

## Claims

1. Asynchronous switching network for a communication installation core (1) comprising packet mode units (2, 3, 6) directly or indirectly interconnected by point-to-point links (L) having exactly the same physical structure and temporarily managed in exactly the same manner, comprising a traffic control system including distributed access control means (14, 8, 16) in each packet mode unit to enable said unit to set the order of communication of packets sent to it by the other packet mode units according to constraints specific to it and imposed temporarily or permanently and/or constraints reported to it by the other units with which it communicates, each transmission of a packet from a packet mode unit to another packet mode unit requiring the sending of a request by the unit requiring to send to the unit with which it requires to communicate and the sending of an acquiescence in the opposite direction from the latter for each of the packet elements separately transmitted between said units.

2. Asynchronous switching network according to claim 1 wherein each packet element separately transmitted between units is encapsulated in a fixed size cell having a header for transmission within the installation between packet mode units, said network comprising a traffic control system provided with means (8, 22, 12, 19, 25) enabling the sending of individual requests from each packet mode unit by insertion of specific request data into the header of encapsulated cells sent from the unit in question, each request sent in an encapsulated cell header including a priority indication supplied by the sending unit.

3. Asynchronous switching network according to claim 2 comprising a traffic control system provided with distributed send storage means (20, 21, 23) in each packet mode unit for temporarily storing the encapsulated cells to be sent according to individual priorities determined for said cells at said unit and optionally for dissociating the encapsulated cells relating to "connected" mode traffic, implying transmission between packet mode units with given time constraints, from those relating to "connectionless" mode traffic with less severe constraints.

4. Asynchronous switching network according to claim 3 comprising a traffic control system provided with distributed temporary send storage means (26) in each packet mode unit for storing in separate stacks requests and acquiescences to be sent to other packet mode units.

5. Asynchronous switching network according to claim 3 comprising a traffic control system provided with distributed temporary receive storage means (27, 29) in each packet mode unit for separately recovering requests and acquiescences sent to said unit in the headers of the encapsulated cells that it receives from other units and the other elements of the received encapsulated cells.

6. Asynchronous switching network according to claim 5 wherein additional storage means (30, 31) are associated with the temporary storage means in each packet mode unit for storing in separate stacks the elements of encapsulated cells received relating to "connected" mode traffic and those relating to "connectionless" mode traffic.

7. Asynchronous switching network according to claims 3 and 5 wherein the send (23) and receive (29) temporary storage means are respectively divided into a plurality of parallel modules (23A through 23D, 29A through 29D) to enable separate storage of encapsulated cells according to the units to which said cells are respectively to be sent or from which they are to be received and to authorize interleaved transmission of encapsulated cells either sent to different destination units or received from different sending units.

8. Asynchronous switching network according to at least one of the preceding claims wherein the packet mode units (2, 3, 6) each have two bidirectional links (L) which are separately connected each to one of the two units of a pair of broadband switching units (7, 7') to which all the packet mode units are connected for point-to-point communication therebetween via one or other of said switching units.
